# EUROPÄISCHE PATENTSCHRIFT

(11) **EP 1 866 553 B1**
(45) Veröffentlichungstag und Bekanntmachung des Hinweises auf die Patenterteilung: **29.04.2009**
(21) Anmeldenummer: 06706029.3
(22) Anmeldetag: 09.03.2006
(51) Int. Cl.: F16C 19/18, F16C 43/04, F16C 35/063, B60B 27/00

(54) **BUND MIT STIRNSEITIGEN ZÄHNEN FÜR EINE ANTREIBBARE RADNABE**
COLLAR HAVING END-SIDE TEETH FOR A DRIVABLE WHEEL HUB
EPAULEMENT A DENTS COTE FACE, DESTINE A UN MOYEU ENTRAINE

(30) Priorität: 08.04.2005 DE 102005016427
(43) Veröffentlichungstag der Anmeldung: 19.12.2007
(73) Patentinhaber: Schaeffler KG, 97421 Schweinfurt (DE)
(72) Erfinder: LANGER, Roland, 97523 Schwanfeld (DE); MASUR, ErNst, 97508 Untereuerheim (DE); HEISS, Ralf, 97421 Schweinfurt (DE); FÜLLER, Benno, 97753 Karlstadt (DE); NIEBLING, Peter, 97688 Bad Kissingen (DE)
(86) Internationale Anmeldenummer: PCT/DE2006/000411
(87) Internationale Veröffentlichungsnummer: WO 2006/105748

(56) Entgegenhaltungen:
- DE-A1- 3 604 630
- DE-A1- 3 636 243
- DE-A1- 10 305 086
- DE-A1- 19 637 940
- DE-C1- 3 116 720
- GB-A- 2 122 724
- US-A- 5 226 738
- US-A1- 2002 051 597

## Beschreibung

### Gebiet der Erfindung

Die Erfindung betrifft einen Bund aus kalt plastisch verformten Material einer Nabe, mit dem wenigstens ein Innenring einer Radlagereinheit auf der Nabe axial fest gehalten ist und in den stirnseitig Zähne für den Eingriff in eine Gegenverzahnung eingeformt sind.

### Hintergrund der Erfindung

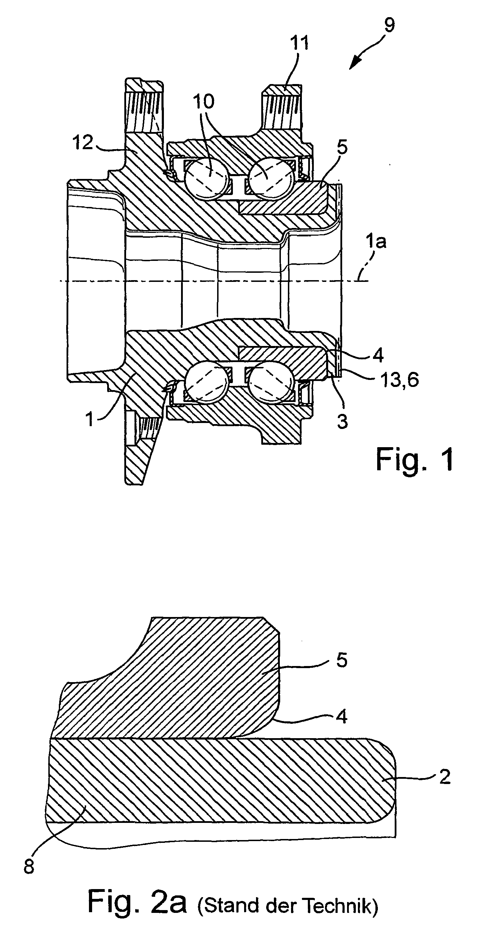

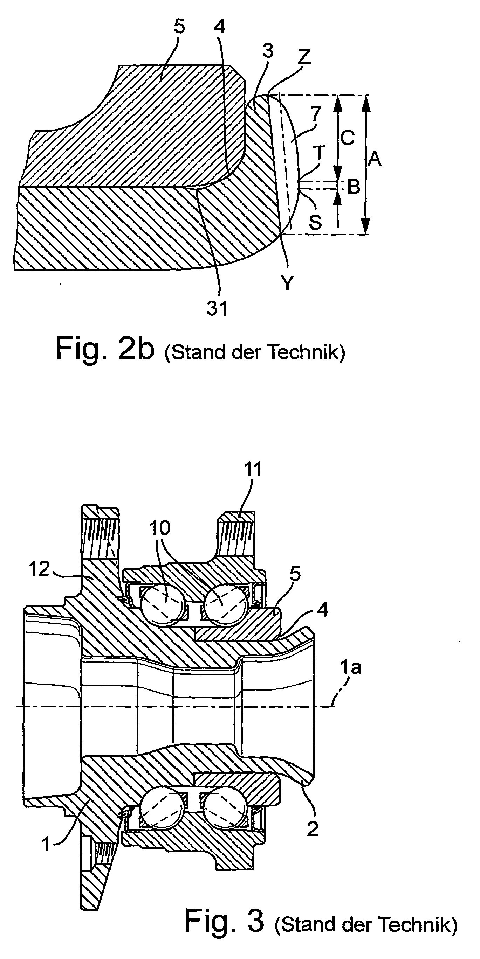

Mit einem derartigen Bund befasst sich DE 36 36 243 A1. Mittels des Bundes ist die Radlagereinheit, in der Regel eine Schrägkugellager- oder Schrägrollenanordnung, spielfrei vorgespannt in sich gehalten. Der fertige Bund 3 nach Figur 1 wird wie in Figur 2a und Figur 3 dargestellt, aus einem einteilig mit einer Nabe 1 ausgebildeten hohlen Endstück 2 geformt. Beim Formen des Bundes 3 wird das Material des Endstückes 2 plastisch über die Kante 4 des Innenringes 5 radial nach außen umgelegt. Wenn der Bund 3, wie auch in Figur 2b dargestellt, eine Stirnverzahnung 6 mit Zähnen 7 für den Eingriff in eine nicht weiter dargestellte Gegenverzahnung aufweist, werden die Zähne 7 entweder beim Umlegen des Endstückes 2 zum Bund 3 mit eingeformt oder die Zähne 7 werden mit einem gesonderten Verfahrensschritt in den fertigen Bund 3 eingebracht. Die Gegenverzahnung ist beispielsweise an einer Glocke einer Gelenkwelle ausgebildet.

Der Bund 3 wird mit einem Werkzeug aus dem Endstück 2 geformt. Dazu wird das zunächst im wesentlichen hohlzylindrische Endstück 2, wie in Figur 3 dargestellt, radial trichterförmig aufgeweitet und in der Endstellung nach Figur 2b zum Bund 3 geformt. Problematisch ist das Ausformen der Zähne 7. Das Material des Teils 8 des Endstückes 2 verjüngt sich beim Aufweiten und Umlegen und fließt radial nach außen. Der jeweilige Zahn 7 ist aufgrund des unkontrollierbaren Wegfließens des Materials nach außen nicht voll ausgeformt und der tragende Anteil, der insbesondere von dem Maß B bestimmt ist, ist gering. B ist eine Strecke zwischen den Punkten S und T. Der nicht ausgefüllte Anteil C und A - (B + C) ist gemessen am Gesamtanteil des Zahnes 7 über die Länge A gering.

Ein Anteil des Materials weicht unter Umständen auch unkontrolliert nach innen aus, so dass sich zwischen dem Innenring 5 und der Nabe 1 ein Ringspalt 31 ausbildet, der sich nachteilig auf den Festsitz des Innenringes 5 auswirkt.

Dieses Problem versuchte die Fachwelt, wie in DE 36 36 243 A1 dargestellt, durch ein Werkzeug zu verhindern, das den Bund radial außen am Wegfließen hindert. Der Prozess ist jedoch aufgrund von Toleranzen in den Abmessungen des Rohlings, wie Wandstärke und Durchmesser des Endstückes, in der Regel schwer in der erforderlichen Güte realisierbar.

Bei der Montage des Antriebselementes in die Radnabenanordnung zentrieren sich das Antriebselement und die Radnabe bezüglich der Rotationsachse aufgrund der Geometrie der Verzahnung zueinander. Eine hohe Rundlaufgenauigkeit an der Verbindung im Fahrbetrieb ist somit abgesichert. Die Montage des Gelenkteils zur Nabe gestaltet sich einerseits aufgrund der Selbstzentrierung einfach, bedarf andererseits jedoch einer sehr hohen axialen Vorspannkraft.

Die Flanken aller Zähne der Stirnverzahnung stehen mit beiden Flanken aller Zähne der Gegenverzahnung im Eingriff. Die Verzahnungen sind mittels eines oder mehrerer Schraubelemente axial verspannt. Drehmomente werden durch den aus Flächenpressung erzeugten Kraft - Formschluss auf die Radnabe übertragen.

Die Verbindung des Gelenkteils mit einer Radnabe ist insbesondere dann von Vorteil, wenn hohe Momente vom Antrieb zum Rad oder u.U. auch im umgekehrten Momentenfluss übertragen werden sollen. Oft sind die üblicherweise eingesetzten Paarungen aus Innen- und Außenverzahnungen bauraumtechnisch und somit hinsichtlich der Festigkeit ausgereizt, so dass die Stirnverzahnung eine sichere und Bauraum sparende Alternative zu diesen ist. Die starre Auslegung zur Übertragung von hohen Drehmomenten zum Rad kann sich dann nachteilig auswirken, wenn im Falle von Überlast ein Bruch der Radnabe im ungünstigsten Fall zum Verlust des Fahrzeugrades führt.

### Zusammenfassung der Erfindung

Die Aufgabe der Erfindung ist es daher, einen Bund zu schaffen mit dessen Gestaltung die zuvor genannten Nachteile vermieden werden.

Diese Aufgabe ist durch die Merkmale des Anspruchs 1 und eines weiteren unabhängigen Anspruches gelöst. Der Bund ist aus plastisch verformten Material des Endstückes der Nabe gebildet, Das Material des hohlen Endstückes ist vorzugsweise kalt durch das so genannte Wälznieten, ein Prozess aus Aufweiten, Biegen und Prägen, radial nach außen über die radial innen und axial außen liegende Kante des Innenringes geformt. Das einstückig mit der Nabe ausgebildete Endstück ist nach der Erfindung nicht im wesentlichen hohlzylindrisch ausgebildet, sondern weist eine Materialanhäufung auf. Die Materialanhäufung ist an dem Anteil des Endstückes ausgebildet, der axial über die Innenkante des Innenringes hinaus steht. Aufgrund der Rotationssymmetrie des Endstückes ist die um die Rotationsachse umlaufende Materialanhäufung in der Regel eine in Umfangsrichtung geschlossene oder unterbrochene wulstförmige Verdickung.

Die Verdickung ist beliebig gestaltet und kann in beide radiale Richtungen, also radial nach außen von der Rotationsachse weg und/oder zur Rotationsachse hin, hervorstehen. Vorzugsweise steht die Verdickung vor dem Formen des Bundes radial nach innen in Richtung der Rotationsachse der Nabe aus dem Endstück hervor.

Eine Ausgestaltung der Erfindung sieht vor, dass die Verdickung an einem freien und von der Nabe weisenden axialen Ende des Endstückes ausgebildet ist.

Durch die Materialanhäufung an dem Endstück steht beim Formen der Verzahnung genug Material zum Füllen der Kavitäten für die Zähne im Formwerkzeug zur Verfügung. Der Zahn ist in seiner Kontur deutlich besser ausgefüllt und der tragende Anteil ist somit deutlich erhöht. Gesonderte Maßnahmen zur Eingrenzung des radialen Materialflusses sind nicht notwendig.

Die Gestaltung des einzelnen Zahnes kann durch die Form und Querschnitt der Verdickung beeinflusst und optimiert werden. So ist vorgesehen, dass die Außenkontur der Verdickung zu der Stirnseite des Endstückes hin in Richtung der Rotationsachse abfällt.

Die Kontur der Zähne ist in jeweiligen durch den Zahnkopf längs der Rotationsachse verlaufenden Schnitten durch den Bund als zum Teil als eine Strecke wiedergeben, wobei die Strecke den jeweiligen Zahnkopf stirnseitig begrenzt. Die Strecke beschreibt den geraden Verlauf der Zahnkopfkontur in dem Längsschnitt entlang der Rotationsachse.

Die optimale Größe der Strecke ist mit Ausgestaltungen der Erfindung vorgesehen. Der kürzeste radiale Abstand zwischen den Endpunkten der Strecke ist in einer axialen Projektion der Strecke betrachtet mindestens genauso groß wie die in einer axialen Projektion der Länge des Zahnes betrachtete Hälfte der größten dieser Länge des jeweiligen Zahnes in radialer Richtung. Durch ein derartiges Mindestmaß ist abgesichert, dass jeder einzelne tragende Zahn in axialer Richtung und in Umfangsrichtung ausgefüllt ist. Die Kontur des einzelnen tragenden Zahnes ist in einem Längsschnitt entlang der Rotationsachse der Nabe zunächst durch eine Einlaufkontur beschrieben, wobei die Einlaufkontur radial vom Zahnfuß nach außen zu der Strecke hin über der Rotationsachse ansteigend verläuft. Die Einlaufkontur ist beliebig konkav oder konvex gekrümmt oder ist eine Fase.

Die Einlaufkontur geht an dem radial innen gelegenen der Endpunkte in die Strecke über. Die Strecke geht an dem radial außen liegenden Endpunkt der Strecke aus zum Zahnfuß hin in eine Auslaufkontur über, wobei die Auslaufkontur von dem Endpunkt aus über der Rotationsachse ansteigend progressiv oder degressiv bzw. linear oder anders beliebig verläuft.

Die Einlaufkontur und die Auslaufkontur enden zahnfußseitig jeweils an einem Schnittpunkt, an dem der Zahn in die Nabe übergeht. Der Schnittpunkt ist die Wurzel des Zahnes, an dem die Kontur des einzelnen Zahnes am Scheitel der Zahnlücke zum betreffenden Zahn in die massive Basis des Bundes übergeht.

Der Abstand zwischen dem radial außen liegenden Endpunkt am Ende der Strecke und dem radial äußeren der Schnittpunkte ist in der axialen Projektion höchstens so groß, wie ein in axialer Projektion betrachtetes Drittel der größten Länge des jeweiligen Zahnes in radialer Richtung. Die Länge des jeweiligen Zahnes ist durch den Abstand zwischen den Schnittpunkten beschrieben.

Die Zähne sind so keilförmig ausgebildet, dass die geometrischen Linien der Stirnverzahnung zentral in einem gemeinsamen Punkt auf der Rotationsachse zusammentreffen. Die geometrischen Linien sind die Körperkanten des Zahnes unbeachtlich etwaiger Kantenradien, Fasen, Verrundungen usw..

Eine weitere Ausgestaltung der Erfindung sieht vor, dass die für den Eingriff vorgesehenen Flanken der Zähne der Stirnverzahnung jeweils mit einem Flankenwinkel größer als 20° und kleiner als 30° geneigt sind. Der Flankenwinkel ist im Falle einer symmetrisch ausgebildeten Verzahnung die Hälfte des Zahnwinkels. Die Flanken sind mit dem Flankenwinkel zu einer gedachten und von der Rotationsachse abgehenden Teilungsebene E geneigt.

Den Abmessungen und Änderungen der Abmessungen von Stirnverzahnungen sind an Radlagerungen aus Bauraumgründen Grenzen gesetzt. Der Teilkreisdurchmesser (mittlerer Umfang der Stirnverzahnung um die Rotationsachse) der Verzahnung ist demnach in der Regel innerhalb sehr enger Grenzen festgeschrieben. Demnach kann das Verhalten der Verzahnung, beispielsweise gegen Belastungen aus den Antriebsdrehmomenten kaum oder nicht durch Änderungen des Teilkreises der Verzahnung beeinflusst werden. Mit der Erfindung wird die Geometrie der einzelnen Zähne der Verzahnung über den Flankenwinkel so beeinflusst, dass hinsichtlich Montage und hinsichtlich der Belastungen aus Drehmomenten eine optimale Anzahl von Zähnen auf vorgegebenem Umfang festgelegt werden kann. Der Flankenwinkel der spielfrei im Eingriff mit der Gegenverzahnung stehenden wirksamen Flanken beträgt vorzugsweise 22,5°. Durch diese Gestaltung sind die Vorspannkräfte bei der Montage wegen der relativ niedrigen Axialkraftkomponenten in der Verzahnung gering gehalten. Der Querschnitt jedes einzelnen Zahnes in der Zahnwurzel ist so ausgelegt, dass die Stirnverzahnung hohe Drehmomente im Nennbetrieb überträgt, jedoch bei einem vorgeschriebenen Bruchmoment nachgibt.

### Beschreibung der Zeichnungen

Die Figuren 1 bis 6 zeigen Längsschnitte oder Details von Längsschnitten entlang der Rotationsachse 1 a einer Radlageranordnung 9 in verschiedenen Modifikationen von Ausführungsbeispielen der Erfindung.

Die Figuren 1, 3, 5 zeigen eine Radlageranordnung 9. mit einer Nabe 1, zwei Reihen Wälzkörper 10 und einem Fahrzeugflansch 11. Die Nabe 1 weist einen Flansch 12 zur Befestigung eines nicht dargestellten Fahrzeugrades auf und ist über die Wälzkörper 10 um die Rotationsachse 1a drehbar zum fahrzeugfesten Fahrzeugflansch 11 gelagert. Auf der Nabe 1 sitzt ein Innenring 5 auf dem eine Reihe der Wälzkörper 10 abläuft. In den Darstellungen nach den Figuren 4 und 5 ist das einteilig mit der Nabe 1 verbundene Endstück 14, 15 oder 17 in der Ausgangsstellung vor dem Wälznieten gezeigt. Der Innenring 5 ist, wie in einem vergrößerten Detail nach Figur 6b dargestellt, mittels eines aus den Endstücken 14, 15 oder 17 hervorgegangenen Bundes 16 axial auf der Nabe 1 gehalten. Dazu ist das hohle Endstück 14, 15 oder 17 radial nach außen über eine Kante 4 des Innenringes 5 geformt. Außerdem ist die Schrägkugellageranordnung mittels des Bundes 16 vorgespannt. In dem Bund 16 ist eine Stirnverzahnung 13 ausgebildet.

Die hohlen Endstücke 14, 15 oder 17 weisen vor dem Formen des Bundes 16 im Ausgangszustand in axiale Richtung und stehen dabei axial über die mit einem Radius R verrundete Kante 4 hinaus. Die Endstücke 14, 15 oder 17 weisen zumindest an dem Teil 8, an dem sie axial über die Kante 4 hinaus stehen eine Anhäufung des Materials in Form einer radialen Verdickung 18, 19 oder 20 auf.

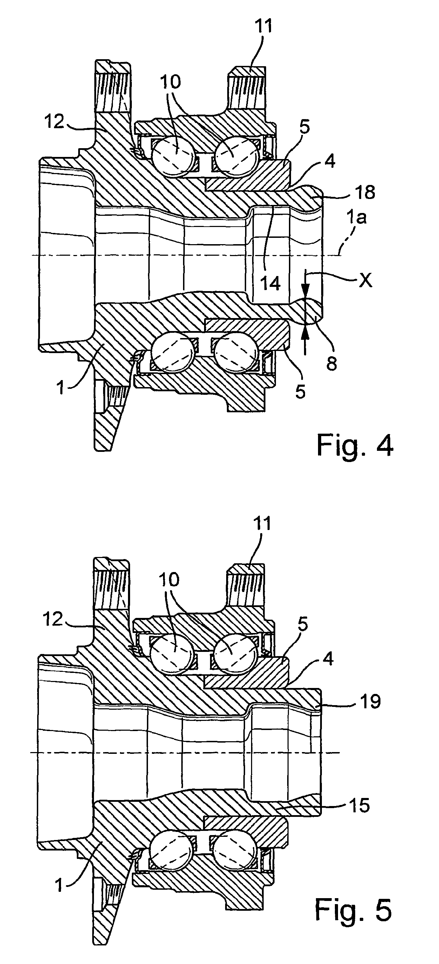

Die in Figur 4 dargestellte rotationssymmetrische Verdickung 18 an dem Endstück 14 weist mittig die größte radiale Abmessung X auf und steht radial in Richtung der Rotationsachse 1a und radial nach außen aus dem Endstück 14 hervor.. Beim axialen Formen des Bundes 16 und der Stirnverzahnung 13 wird das Material in beide radiale Richtungen verteilt.

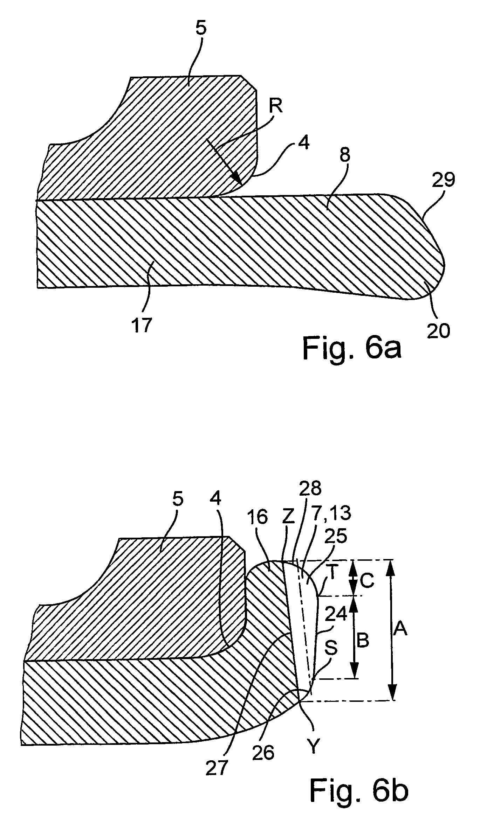

Die in Figur 5 dargestellte Verdickung 19 steht radial in Richtung der Rotationsachse 1a hervor und ist an dem freien in axiale Richtung weisenden Ende des Endstückes 15 am dicksten. Beim Formen der Stirnverzahnung 13 wird eine derartige Materialanhäufung insbesondere in dem Bereich C (Figur 6) wirksam, so dass weniger Material nach außen fließt und so im Bereich B zum Auffüllen der Kavitäten der Zähne 7 zur Verfügung steht.

Die in Figur 6a dargestellte Verdickung 20 steht radial in Richtung der Rotationsachse 1a hervor. Die Außenkontur 29 der Verdickung 20 fällt zu der Stirnseite 21 des Endstückes 17 hin in Richtung der Rotationsachse 1a ab. Mit einer derartigen Ausgestaltung der Erfindung ist der Fluss und die Verteilung des Materials beim Umformen optimiert.

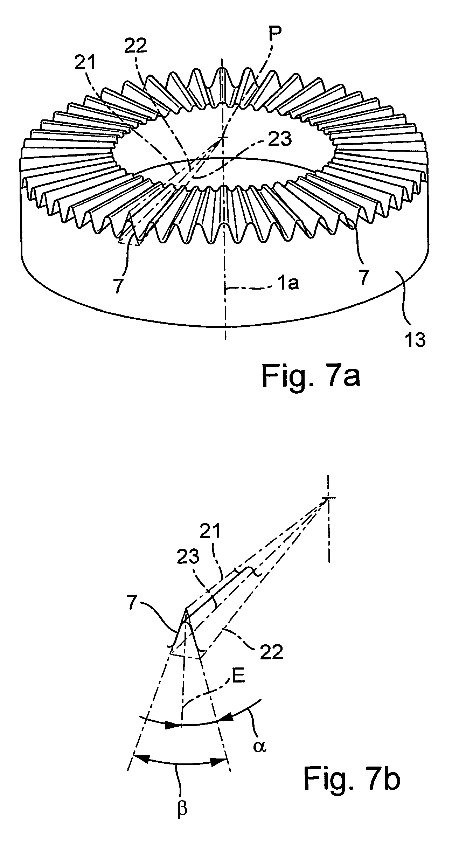

Die Figuren 7a und 7b zeigen in stark vereinfachter Form die Gesamtansicht einer möglichen Gestaltungsform der Stirnverzahnung 13. Die Zähne 7 sind um die Rotationsachse 1 a umfangsseitig zueinander benachbart und der Länge A nach radial ausgerichtet. Die Figuren 7a und 7b zeigen wie die Geometrie ohne Verrundung der einzelne keilförmig ausgebildete Zahn 7 kopf-, fuß- und flankenseitig durch radial ausgerichtete geometrische Linien 21, 22, 23 beschrieben ist, die sich in dem Schnittpunkt P treffen. Der Schnittpunkt P ist der gemeinsame Schnittpunkt für alle radial verlaufenden geometrischen Linien 21, 22, 23 des Zahnkranzes. Der Zahnwinkel β zwischen den Flanken 30 ist das Zweifache des Zahnflankenwinkels α und ist dabei über die gesamte radiale Erstreckung jedes einzelnen Zahnes 7 konstant.

Die Kontur der Zähne 7 ist in jeweiligen durch den Zahnkopf 25 längs der Rotationsachse 1a verlaufenden Schnitten durch den Bund 16 als eine Strecke 24 wiedergeben, wobei die Strecke 24 den jeweiligen Zahnkopf 25 stirnseitig begrenzt, Der kürzeste radiale Abstand B zwischen den Endpunkten S und T der Strecke 24 ist in einer axialen Projektion B der Strecke 24 betrachtet mindestens genauso groß wie die in einer axialen Projektion A betrachtete Hälfte der größten Länge A des jeweiligen Zahnes 7 in radialer Richtung. Die Kontur des jeweiligen Zahnes 7 ist in dem Längsschnitt zunächst durch eine Einlaufkontur 26 beschrieben. Die Einlaufkontur 26 verläuft radial vom Zahnfuß 27 aus nach außen zu der Strecke 24 hin über der Rotationsachse progressiv ansteigend und geht an dem radial innen gelegenen der Endpunkte S in die Strecke 24 über. Radial außen geht die Strecke 24 in eine von dem außen liegenden Endpunkt T aus zum Zahnfuß 27 hin verlaufende Auslaufkontur 28 über. Die Auslaufkontur 28 verläuft von dem Endpunkt T aus über der Rotationsachse 1a degressiv ansteigend. Die Einlaufkontur 26 und die Auslaufkontur 28 gehen zahnfußseitig jeweils an einem Schnittpunkt Y bzw. Z in die Nabe 1 über.

Der radiale Abstand C zwischen dem radial außen gelegenen Endpunkt T und dem radial äußeren der Schnittpunkte Y der axialen Projektion C höchstens so groß ist, wie ein in axialer Projektion A betrachtetes Drittel der größten Länge A des jeweiligen Zahnes 7 in radialer Richtung, wobei die Länge A des jeweiligen Zahnes A durch den Abstand A zwischen den Schnittpunkten Y und Z beschrieben ist.

### Bezugszeichen

- 1: Nabe
- 1a: Rotationsachse
- 2: Endstück
- 3: Bund
- 4: Kante
- 5: Innenring
- 6: Stirnverzahnung
- 7: Zahn
- 8: Teil
- 9: Radlageranordnung
- 10: Wälzkörper
- 11: Fahrzeugflansch
- 12: Flansch
- 13: Stirnverzahnung
- 14: Endstück
- 15: Endstück
- 16: Bund
- 17: Endstück
- 18: Verdickung
- 19: Verdickung
- 20: Verdickung
- 21: geometrische Linie
- 22: geometrische Linie
- 23: geometrische Linie
- 24: Strecke
- 25: Zahnkopf
- 26: Einlaufkontur
- 27: Zahnfuß
- 28: Auslaufkontur
- 29: Außenkontur
- 30: Flanke
- 31: Ringspalt

## Patentansprüche

1. Bund (16) aus plastisch verformten Material einer Nabe (1), mit dem wenigstens ein Innenring (5) einer Radlagereinheit auf der Nabe (1) axial fest gehalten ist und in den stirnseitig Zähne (7) für den Eingriff in eine Gegenverzahnung eingeformt sind, der Bund (16) mit den Merkmalen:
- der Bund (16) ist aus einem radial nach außen über eine Kante (4) des Innenringes (5) geformten hohlen Endstück (14, 15, 17) an der Nabe (1), gebildet,
- das Endstück (14, 15, 17) ist einstückig mit der Nabe (1) ausgebildet,
- das Endstück (14, 15, 17) weist in seinem Ausgangszustand vor dem Formen des Bundes (16) in axiale Richtung und steht dabei axial über die Kante (4) hinaus,
- das Endstück (14, 15, 17) weist zumindest an dem Abschnitt, an dem es axial über die Kante (4) hinaus steht, eine Anhäufung des Materials des Endstückes (14, 15, 17) in Form einer radialen Verdickung (18, 19, 20) an dem Endstück (14, 15, 17) auf.

2. Bund (16) nach Anspruch 1, bei dem die Verdickung (18, 19, 20) vor dem Formen des Bundes (16) radial nach innen in Richtung der Rotationsachse (1a) der Nabe (1) aus dem Endstück (14, 15, 17) hervorsteht und um die Rotationsachse (1 a) verläuft.

3. Bund (16) nach Anspruch 1, bei dem die Verdickung (19) an einem freien und von der Nabe (1) weisenden axialen Ende des Endstückes (15) ausgebildet ist.

4. Bund (16) nach Anspruch 3, bei dem die Außenkontur der Verdickung (20) zu der Stirnseite des Endstückes (17) hin in Richtung der Rotationsachse (1a) abfällt.

5. Bund (16) nach Anspruch 1, 2, 3 oder 4, bei dem der Bund (16) zumindest teilweise aus dem plastisch aufgeweiteten, über die Kante (4) umgelegten und formgebend bearbeiteten Material der Verdickung (18, 19, 20) gebildet ist.

6. Bund (16) aus kalt plastisch verformten Material einer Nabe (1), mit dem wenigstens ein Innenring (5) einer Radlagereinheit auf der Nabe (1) axial fest gehalten ist und in den stirnseitig Zähne (7) für den Eingriff in eine Gegenverzahnung eingeformt sind, mit den Merkmalen:
- die Zähne (7) sind um die Rotationsachse (1 a) umfangsseitig zueinander benachbart und der Länge nach radial ausgerichtet,
- die Kontur der Zähne (7) ist in jeweiligen durch den Zahnkopf längs der Rotationsachse (1a) verlaufenden Schnitten als eine Strecke (24) wiedergegeben, wobei die Strecke (24) den jeweiligen Zahnkopf stirnseitig begrenzt,
- der kürzeste radiale Abstand (B) zwischen den Endpunkten (S, T) der Strecke (24) ist in einer axialen Projektion der Strecke (24) betrachtet mindestens genauso groß wie die in einer axialen Projektion betrachtete Hälfte der größten Länge (A) des jeweiligen Zahnes (7) in radialer Richtung.

7. Bund (16) nach Anspruch 6, bei dem die Kontur in den Längsschnitten:
- zunächst durch eine Einlaufkontur (26) beschrieben ist, wobei die Einlaufkontur (26) radial vom Zahnfuß aus nach außen zu der Strecke (24) hin über der Rotationsachse (1a) ansteigend verläuft,
- dann die Einlaufkontur (26) an einem radial innen gelegenen der Endpunkte (S) in die Strecke (24) übergeht,
- und schließlich die Strecke (24) von einem radial außen liegenden der Endpunkte (T) aus zum Zahnfuß (27) hin in eine Auslaufkontur (28) übergeht, wobei die Auslaufkontur (28) von dem Endpunkt (T) aus über der Rotationsachse (1a) ansteigend verläuft,
wobei die Einlaufkontur (26) und die Auslaufkontur zahnfußseitig jeweils an einem Schnittpunkt (Y, Z) enden, an dem der Zahn (7) in die Nabe (1) übergeht.

8. Bund (16) nach Anspruch 7, bei dem der radiale Abstand (C) zwischen dem radial außen gelegenen Endpunkt (T) und dem radial äußeren der Schnittpunkte (Z) in der axialen Projektion höchstens so groß ist, wie ein in axialer Projektion betrachtetes Drittel der größten Länge (A) des jeweiligen Zahnes (7) in radialer Richtung, wobei die Länge des jeweiligen Zahnes (7) durch den Abstand zwischen den Schnittpunkten (Y, Z) beschrieben ist.

9. Bund (16) nach Anspruch 6 bei dem die Zähne (7) so keilförmig ausgebildet sind, dass sich die geometrischen Linien (21, 22, 23) einer Stirnverzahnung (13) zentral in einem gemeinsamen Punkt (P) auf der Rotationsachse (1 a) zusammentreffen.

10. Bund (16) nach Anspruch 9, bei dem die für einen Eingriff in eine Gegenverzahnung vorgesehenen Flanken der Zähne (7) mit einem Flankenwinkel größer als 20° und kleiner als 30° zu einer gedachten und von der Rotationsachse (1 a) abgehenden Teilungsebene geneigt sind.

## Claims

1. Collar (16) made from plastically shaped material of a hub (1), with which at least one inner ring (5) of a wheel bearing unit is secured in an axially fixed manner on the hub (1) and in which teeth (7) for engagement in a mating toothing are formed at the end, the collar (16) having the features:
- the collar (16) is formed from a hollow end piece (14, 15, 17), shaped radially outward over an edge (4) of the inner ring (5), on the hub (1),
- the end piece (14, 15, 17) is formed in one piece with the hub (1),
- the end piece (14, 15, 17) points in the axial direction in its initial state before the collar (16) is formed, and protrudes axially beyond the edge (4) at the same time,
- the end piece (14, 15, 17) has, at least at the section at which it protrudes axially beyond the edge (4), an accumulation of the material of the end piece (14, 15, 17) in the form of a radially thickened portion (18, 19, 20) on the end piece (14, 15, 17).

2. Collar (16) according to Claim 1, in which, before the collar (16) is formed, the thickened portion (18, 19, 20) protrudes radially inward from the end piece (14, 15, 17) in the direction of the rotational axis (1a) of the hub (1) and extends about the rotational axis (1a).

3. Collar (16) according to Claim 1, in which the thickened portion (19) is formed on a free, axial end of the end piece (15) which projects from the hub (1).

4. Collar (16) according to Claim 3, in which the outer contour of the thickened portion (20) drops away toward the end side of the end piece (17) in the direction of the rotational axis (1a).

5. Collar (16) according to Claim 1, 2, 3 or 4, in which the collar (16) is formed at least partially from the plastically widened material of the thickened portion (18, 19, 20) which is placed over the edge (4) and processed in a shaping fashion.

6. Collar (16) made from material of a hub (1) which is subjected to cold plastic shaping and with which at least one inner ring (5) of a wheel bearing unit is secured in an axially fixed fashion on the hub (1), and in which teeth (7) for engagement in a mating toothing are formed at the end, having the features:
- the teeth (7) are adjacent to one another at the circumference around the rotational axis (1a) and are aligned radially lengthwise,
- the contour of the teeth (7) is represented in respective sections, extending through the tooth head along the rotational axis (1a), as a line segment (24), wherein the line segment (24) bounds the respective tooth head at the end,
- the shortest radial distance (B) between the end points (S, T) of the line segment (24) is at least of precisely the same size, when viewed in an axial projection of the line segment (24), as half the maximum length (A) of the respective tooth (7) in the radial direction when viewed in an axial projection.

7. Collar (16) according to Claim 6, in which the contour in the longitudinal sections:
- is firstly described by a run-in contour (26), wherein the run-in contour (26) extends radially from the tooth base outward toward the line segment (24) rising over the rotational axis (1a),
- the run-in contour (26) then merges with the line segment (24) at a radially inner end point (S) of the end points (S),
- and finally the line segment (24) merges with a run-out contour (28) from a radially outer end point (T) of the end points (T) toward the tooth base (27), wherein the run-out contour (28) extends from the end point (T) rising over the rotational axis (1a),
wherein the run-in contour (26) and the run-out contour each end at the tooth base side at a sectional point (Y, Z) at which the tooth (7) merges with the hub (1).

8. Collar (16) according to Claim 7, in which the radial distance (C) between the radially outer end point (T) and the radially outermost of the sectional points (Z) is at maximum as large, in the axial projection, as a third of the maximum length (A), considered in axial projection, of the respective tooth (7) in the radial direction, wherein the length of the respective tooth (7) is described by the distance between the sectional points (Y, Z).

9. Collar (16) according to Claim 6, in which the teeth (7) are of wedge-shaped design such that the geometric lines (21, 22, 23) of an end toothing (13) meet centrally at a common point (P) on the rotational axis (1a).

10. Collar (16) according to Claim 9, in which the edges of the teeth (7) which are provided for engagement in a mating toothing are inclined at an edge angle greater than 20° and less than 30° with respect to a virtual pitch plane starting from the rotational axis (1a).

## Revendications

1. Epaulement (16) constitué d'un matériau déformable plastiquement d'un moyeu (1), avec lequel au moins une bague interne (5) d'une unité de palier de roue est maintenue fixement axialement sur le moyeu (1), et dans lequel sont façonnées du côté face, des dents (7) pour l'engagement dans une denture conjuguée, l'épaulement (16) ayant les caractéristiques suivantes :
- l'épaulement (16) est formé d'une pièce de bout creuse (14, 15, 17) formée radialement vers l'extérieur par dessus une arête (4) de la bague interne (5) sur le moyeu (1),
- la pièce de bout (14, 15, 17) est réalisée d'une seule pièce avec le moyeu (1),
- la pièce de bout (14, 15, 17) est tournée, dans son état initial avant le formage de l'épaulement (16), dans la direction axiale et dépasse en l'occurrence axialement au-delà de l'arête (4),
- la pièce de bout (14, 15, 17) présente, au moins au niveau de la portion à laquelle elle dépasse axialement au-delà de l'arête (4), une accumulation de matériau de la pièce de bout (14, 15, 17) en forme d'épaississement (18, 19, 20) sur la pièce de bout (14, 15, 17).

2. Epaulement (16) selon la revendication 1, dans lequel l'épaississement (18, 19, 20) fait saillie, avant le formage de l'épaulement (16), radialement vers l'intérieur dans la direction de l'axe de rotation (1a) du moyeu (1) depuis la pièce de bout (14, 15, 17), et s'étend autour de l'axe de rotation (1a).

3. Epaulement (16) selon la revendication 1, dans lequel l'épaississement (19) est réalisé à une extrémité axiale libre de la pièce de bout (15) tournée depuis le moyeu (1).

4. Epaulement (16) selon la revendication 3, dans lequel le contour extérieur de l'épaississement (20) descend vers le côté face de la pièce de bout (17) dans la direction de l'axe de rotation (1a).

5. Epaulement (16) selon la revendication 1, 2, 3 ou 4, dans lequel l'épaulement (16) est formé au moins en partie à partir du matériau de l'épaississement (18, 19, 20) élargi plastiquement, recourbé par dessus l'arête (4) et usiné par façonnage.

6. Epaulement (16) constitué d'un matériau déformable plastiquement d'un moyeu (1), avec lequel au moins une bague interne (5) d'une unité de palier de roue est maintenue fixement axialement sur le moyeu (1), et dans lequel sont façonnées du côté face, des dents (7) pour l'engagement dans une denture conjuguée, l'épaulement (16) ayant les caractéristiques suivantes :
- les dents (7) sont orientées radialement en longueur et juxtaposées du côté périphérique autour de l'axe de rotation (la),
- le contour des dents (7) est reproduit sous forme de segment (24) dans des coupes s'étendant à chaque fois à travers la tête des dents le long de l'axe de rotation (la), le segment (24) limitant la tête des dents respectives côté face,
- la distance radiale la plus courte (B) entre les points d'extrémité (S, T) du segment (24), considérée en projection axiale du segment (24), est au moins aussi grande que la moitié de la plus grande longueur (A) de chaque dent (7) dans la direction radiale, considérée dans une projection axiale.

7. Epaulement (16) selon la revendication 6, dans lequel le contour, dans les sections longitudinales :
- est d'abord décrit par un contour d'entrée (26), le contour d'entrée (26) s'étendant en montant radialement depuis la base des dents vers l'extérieur jusqu'au segment (24) au-dessus de l'axe de rotation (la),
- le contour d'entrée (26) se prolongeant ensuite par le segment (24) au niveau d'un des points d'extrémité (S) situé radialement à l'intérieur,
- et finalement le segment (24) se prolongeant en un contour de sortie (28) depuis l'un des points d'extrémité (T) situé radialement à l'extérieur vers la base des dents (27), le contour de sortie (28) s'étendant depuis le point d'extrémité (T) en montant au-dessus de l'axe de rotation (la),
le contour d'entrée (26) et le contour de sortie se terminant du côté de la base des dents chaque fois en un point d'intersection (Y, Z), au niveau duquel la dent (7) se prolonge dans le moyeu (1).

8. Epaulement (16) selon la revendication 7, dans lequel la distance radiale (C) entre le point d'extrémité (T) situé radialement à l'extérieur et le point d'intersection (Z) le plus radialement extérieur dans la projection axiale, est au maximum aussi grande qu'un tiers, considéré dans la projection axiale, de la plus grande longueur (A) de la dent respective (7) dans la direction radiale, la longueur de chaque dent (7) étant décrite par la distance entre les points d'intersection (Y, Z).

9. Epaulement (16), selon la revendication 6, dans lequel les dents (7) sont réalisées en forme de coin, de telle sorte que les lignes géométriques (21, 22, 23) d'une denture frontale (13) se rejoignent centralement en un point commun (P) sur l'axe de rotation (1a).

10. Epaulement (16) selon la revendication 9, dans lequel les flancs des dents (7) prévus pour un engagement dans une denture conjuguée sont inclinés avec un angle de flanc supérieur à 20° et inférieur à 30°, par rapport à un plan de séparation imaginaire partant de l'axe de rotation (1a).
